Europäisches Patentamt

European Patent Office

Office européen des brevets

(19)

(11) Veröffentlichungsnummer : **0 433 283 B1**

(12) **EUROPÄISCHE PATENTSCHRIFT**

(45) Veröffentlichungstag der Patentschrift :
**22.04.92 Patentblatt 92/17**

(51) Int. Cl.⁵ : **B65G 67/60,** B65G 21/12

(21) Anmeldenummer : **88907686.5**

(22) Anmeldetag : **06.09.88**

(86) Internationale Anmeldenummer :
**PCT/EP88/00805**

(87) Internationale Veröffentlichungsnummer :
**WO 90/02699 22.03.90 Gazette 90/07**

(54) **SCHIFFSBE- ODER -ENTLADER.**

(43) Veröffentlichungstag der Anmeldung :
**26.06.91 Patentblatt 91/26**

(45) Bekanntmachung des Hinweises auf die
Patenterteilung :
**22.04.92 Patentblatt 92/17**

(84) Benannte Vertragsstaaten :
**AT BE CH DE FR GB IT LI LU NL SE**

(56) Entgegenhaltungen :
**DE-C- 618 848**

(56) Entgegenhaltungen :
**DE-C- 3 715 056**
**"Fördern und Heben", Jahrgang 18, Nr. 13,**
**1968, B. Kleis u.a.: "Schiffsbeladeanlage für**
**Sackgut und loses Gut", Seiten 803, 804**

(73) Patentinhaber : **O&K Orenstein & Koppel**
**Aktiengesellschaft**
**Brunsbütteler Damm 144-208**
**W-1000 Berlin 20 (DE)**

(72) Erfinder : **STECKEL, Horst**
**Rosenstr. 5**
**W-6670 St. Ingbert (DE)**

## Beschreibung

Die Erfindung betrifft einen Schiffsbe- oder -entlader mit einem im Bereich eines Portales verlagerten Ausleger sowie einem mit einer Be- oder Entladeeinrichtung im Bereich des vorderen schiffsseitigen Auslegerendes zusammenwirkenden, auf jeweils einer oberen und einer unteren Fahrbahn im Bereich des Auslegers verfahrbaren Vorschubkopf mit zugehöriger Zu- oder Abfördereinrichtung, wobei die oberen Fahrbahn im Bereich des vorderen Auslegerendes und die untere Fahrbahn in einem bühnenartig ausgebildeten Bereich des hinteren portalartigen Auslegerendes vorgesehen sind.

Durch die DE-B-12 02 221 ist ein portalartiges Traggerät für einen Schiffsbelader mit einem ein Abwurfförderband tragenden schwenkbaren Ausleger bekannt, dessen freies Ende an einem Pylon des Gerüstes heb- und senkbar aufgehängt ist. Zwischen den Gerüsthälften ist der einen ein- und ausziehbaren Abwurfförderer tragende Ausleger angeordnet, der mit einem Ende auf einer Konsole in einem Lager mit in Fahrrichtung liegender Drehachse abgestützt und mit dem anderen freien Ende an Seilzügen aufgehängt ist, die über die Spitze der Pylone zu Hubwerken in einem an den Pylonen sitzenden Maschinenhaus geführt sind.

Nachteilig ist neben der vom Gewicht her gesehen schweren Ausbildung der Gesamtanlage zu bemerken, daß enorme Kräfte und Momente im Bereich der Fahrbahn des Abwurfförderers auftreten, wenn dieser sich seiner ausgefahrenen Endstellung nähert. Ferner ist die Zugänglichkeit der Bauteile, insbesondere im Betriebszustand, zu Kontroll- und Wartungszwecken nahezu ausgeschlossen, so daß die Anlage erst stillgesetzt werden muß, um notwendige Arbeiten vorzunehmen.

Eine konstruktiv ähnliche Einrichtung ist dem DE-U-74 07 046 zu entnehmen. Der Auslegerarm besteht aus einer in einer ansteigend geführten Brücke, die einseitig um eine senkrechte Achse verdrehbar und um eine waagerechte Achse höhenverschwenkbar in einem Tragportal gelagert ist, angeordneten in Brückenlängsrichtung verfahrbaren Traggestell, in dem ein Transportband angeordnet ist. Um das Traggestell in der Portalbrücke verfahren zu können, sind in dieser Laufrollen angeordnet, wobei das Verfahren mittels einer Antriebsvorrichtung erfolgt. Insbesondere im Hinblick auf die Verlagerung des Traggestells gelten die gleichen Argumente, wie vorab beschrieben. Darüberhinaus ist hier eine verhältnismäßig aufwendige Fachwerkskonstruktion notwendig, um die Kräfte aufzunehmen bzw. abzuleiten.

Infolge der konstruktiv aufwendigen und notwendigen Maßnahmen, die beim Ausfahren des Vorschubkopfes (Traggestell, Abwurfförderer) entstehenden Kräfte und Momente beherrschen zu können, muß die Anlage verhältnismäßig schwer ausgebildet werden, was letztendlich zu erhöhten Kosten führt.

In der Praxis ausgeführte Schiffsbe- oder -entlader wurden bisher aus statischen Gründen wie folgt konzipiert:

Für den Vorschubkopf, beispielsweise für eine Leistung bis 6000 t/h, wurden etwa 1,6 m hohe Schweißträger mit den diversesten Aussteifungen ausgeführt. Der Ausleger selber besteht aus etwa 3,5 m hohen Schweißträgern mit einer Vielzahl von Beulsteifen. Die innerhalb des Auslegers angeordnete Bandanlage sowie die Lagerung bzw. der Antrieb für den Vorschubkopf waren nur auf umständliche Weise zugänglich, so daß sich notwendige Reparatur- bzw. Wartungsarbeiten nur unter hohem Zeit- und Kostenaufwand durchführen ließen.

Eine derartige, vorstehend beschriebene Anlage ist in der Zeitschrift "Fördern und Heben", 18 (1968) Nr. 13, S. 803 und 804 dargestellt und entspricht dem gattungsbildenden Teil des ersten Patentanspruches. Der Ausleger ist hierbei als Kasten ausgebildet, wobei die Wände durch eine Vielzahl von untereinander verbundenen Streben gebildet sind, an welchen windabweisende Bleche angebracht sind. Innerhalb des Auslegers ist ein stationäres Band mit Übergabe auf einen horizontal verfahrbaren Gurfförderer (Vorschubkopf) angeordnet. Im Bereich des freien Auslegerendes ist ein mittels einer auf einem Wagen vorgesehenen Winde heb- und senkbarer Beladekopf angeordnet, wobei der Wagen auf separaten Führungsschienen innerhalb des Kastens verfahrbar ist, dergestalt, daß der Wagen über ein Verbindungsrohr mit dem fahrbaren Förderer verbunden ist und somit durch diesen verfahren wird. Die Nachteile einer derartigen Anlage wurden bereits vorab beschrieben. Darüberhinaus ist diese Anlage stationärer Art und bietet, über ihre Auslegerlänge gesehen, eine große Windangriffsfläche, da sie nicht gegenüber dem eigentlichen Gerät hochschwenkbar ist.

Ausgehend von dem zuletztgenannten des St.d.T. liegt der Erfindung die Aufgabe zugrunde, ein verbessertes statisches System des gesamten Schiffsbe- oder -entladers zu konzipieren, wobei wesentliche Bauteile konstruktiv vereinfacht werden sollen. Ferner sollen eine optimale Zugänglichkeit der mit dem Schiffsbe- oder -entlader zusammenwirkenden Bauteile und gleichzeitig eine beträchtliche Reduzierung des Gesamtgewichtes des Schiffsbe- oder -entladers erreicht werden.

Diese Aufgabe wird erfindungsgemäß durch die Kombination folgender Merkmale gelöst:
– der obere Teil des Auslegers ist als durchgehender Kastenträger ausgebildet,
– auf dem Kastenträger ist ein die Überspannung fixierender Pylon angeordnet,
– die obere Fahrbahn ist oberhalb des Kastenträgers vorgesehen und endet etwa im Bereich des Pylones,

2

– der Antrieb für den Vorschubkopf ist im Bereich des vorderen Auslegerendes auf dem Kastenträger angeordnet,

– der Vorschubkopf ist über Streben mit dem Antrieb fest verbunden.

Vorteilhafte Weiterbildungen des Erfindungsgegenstandes sind den Unteransprüchen zu entnehmen.

Durch die erfindungsgemäßen Maßnahmen kann das Gewicht sowohl des Auslegers als auch des Vorschubkopfes um ca. 30 % verringert werden. Die Anzahl der Laufräder sowie deren Lagerungen kann erheblich reduziert werden. Ferner entfallen die aufwendigen Toleranzen der Laufräder zueinander für das Hineinfahren des Vorschubkopfes. Die Zugänglichkeit für die Wartung oder notwendige Reparaturen ist auf der gesamten Länge des Gewichtsverringerung treten darüberhinaus folgende positive Nebeneffekte auf:

– das Portal wird leichter,

– das Hubwerk wird kleiner,

– es werden weniger Fahrwerke benötigt,

– Transport und Montage werden preiswerter.

Infolge der vorderen, oberen Lagerung des Vorschubkopfes werden die sich sonst bei einseitiger Lagerung einstellenden Kräfte drastisch reduziert, wobei sich neben den bereits aufgezeigten Vorteilen auch eine erhebliche Kostenersparnis einstellt. Das Vorderteil des Auslegers ist zur Aufnahme von Ketten, Seilen sowie zur Lagerung der Triebstöcke und Zahnstangen für den Vorschubkopfantrieb ausgebildet, wodurch sich eine Verlagerung dieser Teile in dem Bereich ungenutzter Flächen einstellt und der Zugang somit erleichtert wird.

Die Erfindung ist in der Zeichnung beispielsweise dargestellt und wird wie folgt beschrieben. Es zeigen:

Fig, I : Schiffsbelader mit angehobenem Ausleger

Fig. 2u.3 : Ausleger des Schiffsbeladers gem. Fig. I in horizontaler Stellung in verschiedenen Ansichten

Fig. 4 : Querschnitt durch den Ausleger

Fig, 5 . Einzeldarstellung der für das Ein- und Ausfahren des Vorschubkopfes zuständigen Gurtschleife

Figur I zeigt einen Schiffsbelader I, der im wesentlichen aus folgenden Komponenten besteht: einem auf Schienen verfahrbaren Portal 2 mit Gegengewicht 3, einer Überspannung 4 mit Seilrolle 5, einem Ausleger 6 mit Vorschubkopf 7 sowie einem daran angelenkten Beladekopf 8. Der Ausleger 6 weist einen Pylon 9 auf, in dessen Spitze ebenfalls eine Seilrolle I0 angeordnet ist sowie als Anlenkpunkt für die Seilabspannung II,I2 dient. Der Ausleger 6 wird mittels einer am Portal 2 verlagerten Winde I3 mit Seil I4, welches über die Seilrollen 5 und I0 geführt ist, angehoben bzw. abgesinkt. Der Vorschubkopf 7 ist in der dargestellten Stellung eingefahren.

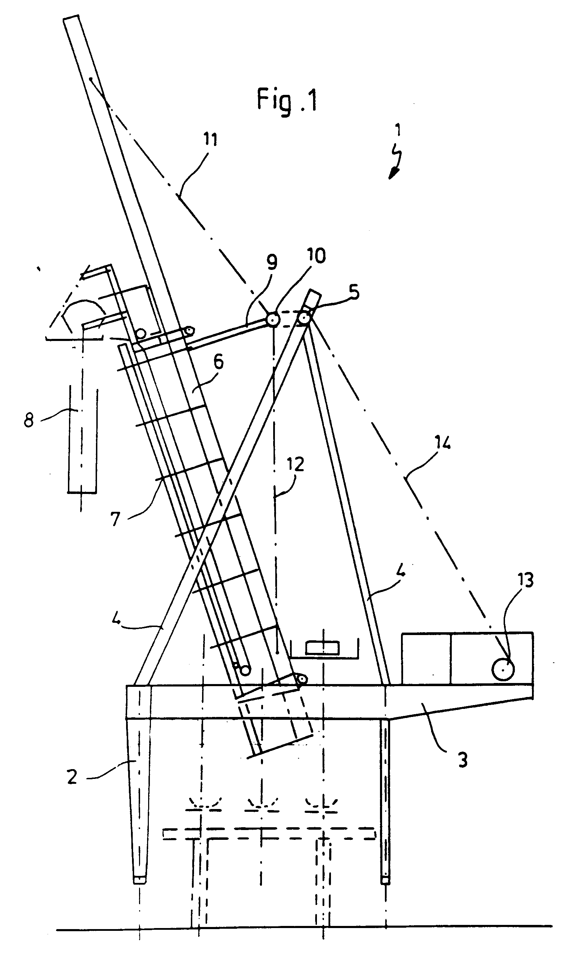

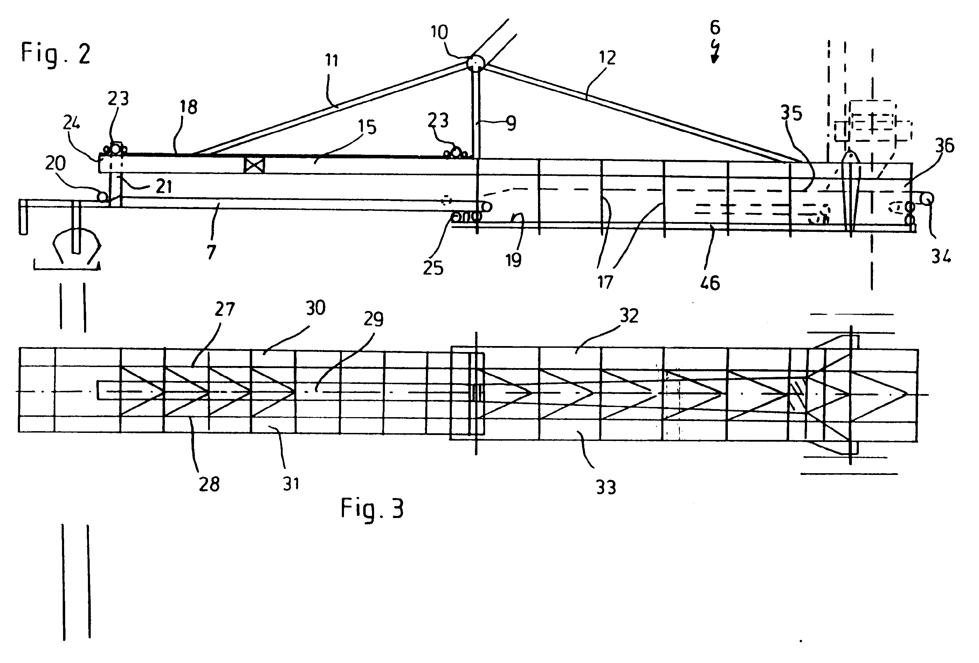

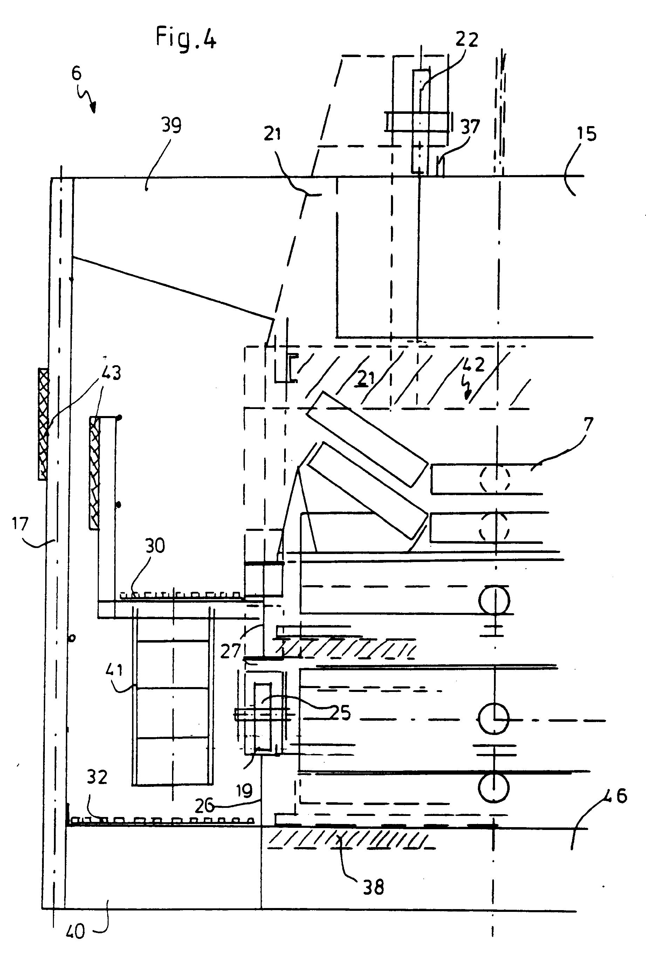

Die Figuren 2 und 3 zeigen ausschließlich den Ausleger 6 zum einen in der Seitenansicht (Fig. 2) und zum anderen in der Draufsicht (Fig. 3). Der Ausleger 6 besteht aus einem oberen Kastenträger I5, in dessen hinterem Bereich I6 eine mittels Hängern I7 äufgehängte Bühne 46 angeordnet ist. Oberhalb des Kastenträgers I5 sind fahrbahnen I8 vorgesehen, die sich etwa bis zum Pylon 9 erstrecken. Der Vorschubkopf 7 selber ist einerseits auf einer unteren Fahrbahn I9 und andererseits auf der oberen Fahrbahn I8 verfahrbar. Zu dem Zweck ist der Vorschubkopf 7 unmittelbar hinter der Abwurftrommel 20 mittels Streben 2I aufgehängt und stützt sich über in Figur 4 dargestellten Laufrädern 22 auf den Fahrbahnen I8 ab. Der Antrieb 23 wird hier dadurch realisiert, daß drei Kettenräder vorgesehen sind, um die eine nicht weiter dargestellte Kette umlenkbar ist. Die Kette hat ihre Festpunkte im Bereich der Auslegerspitze 24 sowie im Bereich des Pylones 9. Im Bereich der unteren Fahrbahn I9 sind ebenfalls mit dem Vorschubkopf 7 zusammenwirkende Laufrollen 25 vorgesehen. In Verbindung mit der Abspannung 9,II,I2 wird hier ein statisch ausgewogenes und vor allen Dingen leichter Ausleger 6 konzipiert. Die untere Fahrbahn I9 wird durch die in Figur 4 dargestellten Bühnenlängsträger 26 gebildet. Der Vorschubkopf 7 selber besteht aus Doppel-T-Trägern 27,28 mit dazwischen zur Verstärkung angeordnetem Windverband 29. Parallel zum Vorschubkopf 7 verlaufen beiderseits Laufstege 30,3I. Analog dazu sind im Bereich der Bühne 46 weitere Laufstege 32,33 vorgesehen. Der Bandantrieb 34 für das Gurtband 35 ist als Schleife ausgebildet und befindet sich im hinteren Teil 36 des Auslegers 6.

Figur 4 zeigt einen Querschnitt durch den Ausleger 6. Dargestellt sind der Kastenträger I5 mit der Fahrbahn I8 sowie dem Laufrad 22. Ferner ist der Kettenantrieb 37 angedeutet. Das Laufrad 22 ist über die Streben 2I mit dem Vorschubkopf 7 verbunden. Ferner dargestellt ist die untere Fahrbahn I9 mit Laufrolle 25 sowie zugehörigem Bühnenlängsträger 26. Unterhalb des Vorschubkopfes 7 ist die Bühne 46 erkennbar, die wie der Vorschubkopf 7 auch mit einem verstärkenden Windverband 38 versehen ist. Seitlich an der Bühne 46 sind oben Konsolen 39 und unten Querträger 40 vorgesehen, die zur Abstützung des Bühnenlaufsteges 32 dienen. Über eine Leiter 4I ist der mit dem Vorschubkopf verbundene Laufsteg 30 erreichbar. Sämtliche Teile der Bandanlage 42 sind problemlos erreichbar, so daß notwendige Reparatur- und Wartungsarbeiten schnell durchgeführt werden können. Die Kontrollperson hat während des Betriebes die komplette Sicht auf alle beweglichen Teile, so daß evtl. anstehende Reparaturen exakt geplant werden können.

Im äußeren Laufstegbereich ist ein Windschutz 43 vorgesehen, damit kein Material vom Förderband geblasen wird.

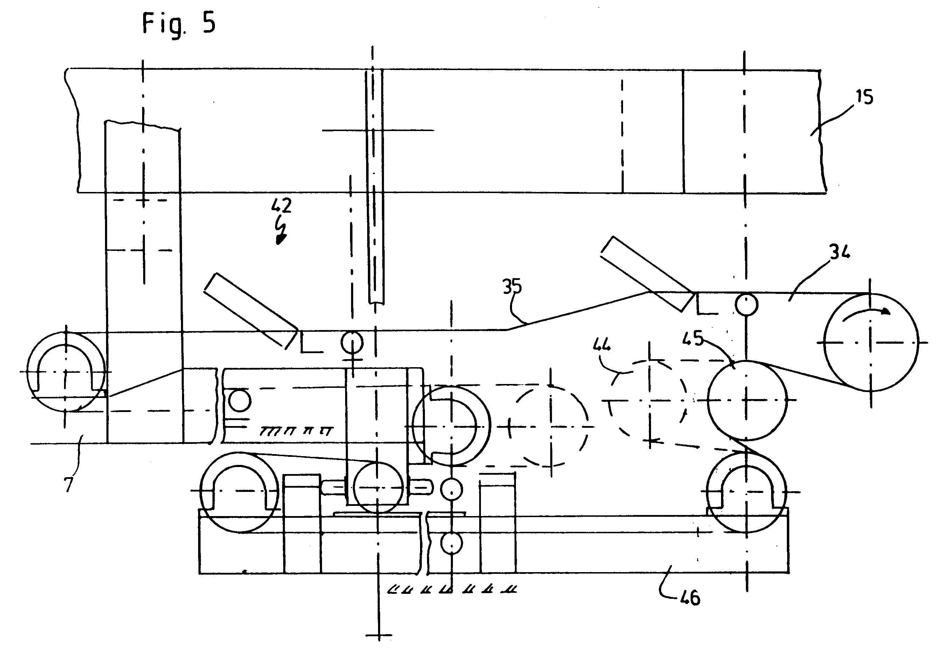

Figur 5 zeigt als Einzeldarstellung den Antrieb 34 für das Gurtband 35, der als Gurtschleife mit Spanntrommeln 44,45 ausgebildet ist. Ferner erkennbar ist der Kastenträger I5, der Vorschubkopf 7 sowie die Verlagerung desselben im Bereich der Bühne 46.

## Patentansprüche

1. Schiffsbe- oder -entlader mit einem im Bereich eines Portales (2,3,4) verlagerten Ausleger (6) sowie einem mit einer Be- oder Entladeeinrichtung (8) im Bereich des vorderen schiffsseitigen Auslegerendes (24) zusammenwirkenden, auf jeweils einer oberen und einer unteren Fahrbahn im Bereich des Auslegers (6) verfahrbaren Vorschubkopf (7) mit zugehöriger Zu- oder Abfördereinrichtung, wobei die obere Fahrbahn (18) im Bereich des vorderen Auslegerendes (24) und die untere Fahrbahn (19) in einem bühnenartig ausgebildeten Bereich (46) des hinteren portalseitigen Auslegerendes vorgesehen ist, gekennzeichnet durch die Kombination folgender Merkmale:
   – der obere Teil des Auslegers (6) ist als durchgehender Kastenträger (15) ausgebildet,
   – auf dem Kastenträger (15) ist ein die Überspannung (11,12) fixierender Pylon (9) angeordnet,
   – die obere Fahrbahn (18) ist oberhalb des Kastenträgers (15) vorgesehen und endet etwa im Bereich des Plyones (9),
   – der Antrieb (23) für den Vorschubkopf (7) ist im Bereich des vorderen Auslegerendes (24) auf dem Kastenträger (15) angeordnet,
   – der Vorschubkopf (7) ist über Streben (21) mit dem Antrieb (23) fest verbunden.
2. Schiffsbe- oder -entlader nach Anspruch 1, dadurch gekennzeichnet, daß bei einem Schiffsbelader der Vorschubkopf (7) unmittelbar hinter der Abwurftrommel (20) und der Gurtumlenkung gegenüber dem oberen Kastenträger (15) bzw. dem Antrieb (23) verlagert ist.
3. Schiffsbe- oder -entlader nach den Ansprüchen 1 und 2, dadurch gekennzeichnet, daß die Tragkonstruktion des Vorschubkopfes (7) aus Walzprofilen (27,28) mit verstärkendem Windverbandprofil (29) gebildet ist.
4. Schiffsbe- oder -entlader nach den Ansprüchen I bis 3, dadurch gekennzeichnet, daß der Antrieb (23) für den Vorschubkopf im vorderen Bereich (24) auf dem Kastenträger (I5) angeordnet ist.
5. Schiffsbe- oder -entlader nach den Ansprüchen I bis 4, dadurch gekennzeichnet, daß der Antrieb (23) durch mehrere zur Führung bzw. Umlenkung eines Antriebsmittels dienende Scheiben gebildet ist, von denen mindestens eine motorisch betätigbar ist.
6. Schiffsbe- oder -entlader nach den Ansprüchen I bis 5, gekennzeichnet durch zwei parallele Antriebe (23) an dem Kastenträger (I5), die auf einer gemeinsamen Achse angeordnet sind.
7. Schiffsbe- oder -entlader nach den Ansprüchen I bis 6, dadurch gekennzeichnet, daß die Breite des Kastenträgers (I5) sich zum Bühnenende verbreitert (46), wobei der Kastenträger (I5) in seinem vorderen Bereich eine geringere Breite aufweist.
8. Schiffsbe- oder -entlader nach den Ansprüchen I bis 7, dadurch gekennzeichnet, daß im Bereich innerhalb des Auslegers (6) zumindest beiderseits der Bandanlage (42) bzw. des Vorschubkopfes (7) jeweils ein Laufsteg (30,3I,32,33) sowie an der Außenseite desselben ein Windschutz (43) vorgesehen ist.
9. Schiffsbe- oder -entlader nach den Ansprüchen I bis 8, dadurch gekennzeichnet, daß auf dem Kastenträger (I5) ein die Überspannung (II,I2) fixierender Pylon (9) angeordnet ist, an dessen Spitze die Seilrollen (I0) zur Umlenkung der Spannseile vorgesehen sind.

## Claims

1. Ship loader or unloader with a boom (6) displaced in the region of a portal (2,3,4) and with an extensible head (7) which co-operates with a loading or unloading device (8) in the region of the forward ship-adjacent end (24) of the boom and is able to be moved on an upper and a lower track in the region of the boom (6), and has a corresponding feed or discharge device, the upper track (18) being provided in the region of the forward end (24) of the boom and the lower track (19) being provided in a platform-like region (46) of the rearward portal-adjacent end of the boom, characterised by the combination of the following features:
   – the upper part of the boom (6) is in the form of a continuous box girder (15),
   – on the box girder (15) there is arranged a pylon (9) fixing the bracing (11,12),
   – the upper track (18) is provided above the box girder (15) and ends approximately in the region of the pylon (9).
   – the drive (23) for the extensible head (7) is arranged in the region of the forward end (24) of the boom on the box girder (15),

– the extensible head (7) is rigidly connected to the drive (23) by way of struts (21).

2. Ship loader or unloader according to Claim 1, characterised in that in a ship loader the extensible head (7) is displaced immediately behind the discharge drum (20) and the belt return point with respect to the upper box girder (15) and/or the drive (23).

3. Ship loader or unloader according to Claims 1 and 2, characterised in that the supporting construction of the extensible head (7) is formed of rolled sections (27,28) with reinforcing wind bracing section (29).

4. Ship loader or unloader according to Claims 1 to 3, characterised in that the drive (23) for the extensible head is arranged in the forward region (24) on the box girder (15).

5. Ship loader or unloader according to Claims 1 to 4, characterised in that the drive (23) is formed by a plurality of pulleys serving to guide or deflect a drive means, at least one of which pulleys is motor-driven.

6. Ship loader or unloader according to Claims 1 to 5, characterised by two parallel drives (23) on the box girder (15) which are arranged on a common shaft.

7. Ship loader or unloader according to Claims 1 to 6, characterised in that the width of the box girder (15) increases towards the end of the platform (46), the box girder (15) having a lesser width in its forward region.

8. Ship loader or unloader according to Claims 1 to 7, characterised in that in the region within the boom (6) at least on both sides of the belt installation (42) and/or of the extensible head (7) a catwalk (30,21,32,33) is provided in each case, and also a windshield (43) on the outside of the latter.

9. Ship loader or unloader according to Claims 1 to 8, characterised in that on the box girder (15) there is arranged a pylon (9) fixing the bracing (11,12), and having at its apex the cable pulleys (10) for the deflection of the tensioning cables.


**Revendications**

1. Chargeur ou déchargeur de navire, avec une flèche (6) déplacée dans la région d'un portique (2,3,4), et avec une tête d'alimentation (7), à laquelle est associé un convoyeur d'amenée ou d'évacuation, qui peut être déplacée sur des voies de roulement supérieure et inférieure respectives dans la région de la flèche (6) et coopère avec un dispositif de chargement ou de déchargement (8) dans la région de l'extrémité avant (24), côté navire, de la flèche, la voie de roulement supérieure (18) étant prévue dans la région de l'extrémité avant (24) de la flèche et la voie de roulement inférieure (19) dans une région (46), configurée en plate-forme, de l'extrémité arrière, côté portique, de la flèche, caractérisé par la combinaison des caractéristiques suivantes:
  – la partie supérieure de la flèche (6) est réalisée en forme de poutre en caisson continue (15),
  – un pylône (9) fixant en position le haubanage (11,12) est disposé sur la poutre en caisson (15),
  – la voie de roulement supérieure (18) est prévue au dessus de la poutre en caisson (15) et se termine approximativement dans la région du pylône (9),
  – l'entraînement (23) pour la tête d'alimentation (7) est disposé sur la poutre en caisson (15), dans la région de l'extrémité avant (24) de la flèche,
  – la tête d'alimentation (7) est assemblée rigidement à l'entraînement (23) par des entretoises (21).

2. Chargeur ou déchargeur de navire selon la revendication 1, caractérisé en ce que, pour un chargeur de navire, la tête d'alimentation (7) est, par rapport à la poutre en caisson supérieure (15) ou encore à l'entraînement (23), décalée juste derrière le tambour de déversement (20) et le renvoi de courroie.

3. Chargeur ou déchargeur de navire selon la revendication 1 ou 2, caractérisé en ce que la construction porteuse de la tête d'alimentation (7) est constituée de profilés laminés (27,28) renforcés par un profilé de contreventement (29).

4. Chargeur ou déchargeur de navire selon l'une des revendications 1 à 3, caractérisé en ce que l'entraînement (23) pour la tête d'alimentation est disposé dans la région avant (24) sur la poutre en caisson (15).

5. Chargeur ou déchargeur de navire selon les revendications 1 à 4, caractérisé en ce que l'entraînement (23) est constitué de plusieurs poulies servant à guider ou renvoyer un moyen d'entraînement, dont au moins une est motorisée.

6. Chargeur ou déchargeur de navire selon les revendications 1 à 5, caractérisé par deux entraînements parallèles (23) sur la poutre en caisson (15), qui sont disposés sur un axe commun.

7. Chargeur ou déchargeur de navire selon les revendications 1 à 6, caractérisé en ce que la largeur de la poutre en caisson (15) augmente vers l'extrémité en plate-forme (46), la poutre en caisson (15) présentant une largeur moindre dans sa région avant.

8. Chargeur ou déchargeur de navire selon les revendications 1 à 7, caractérisé en ce qu'une passerelle respective (30,31,32,33) est prévue dans la région située à l'intérieur de la flèche (6), au moins de part et d'autre de la bande transporteuse (42) ou encore de la tête d'alimentation (7), et un pare-vent (43) est disposé sur le côté extérieur de la passerelle respective.

9. Chargeur ou déchargeur de navire selon les revendications 1 à 8, caractérisé en ce qu'un pylône (9) fixant en position le haubanage (11,12) est disposé sur la poutre en caisson (15), au sommet duquel sont prévues les poulies (10) pour le renvoi des câbles de tension.

Fig .1

Fig. 2

Fig. 3

Fig.4

Fig. 5